# EUROPEAN PATENT APPLICATION

(11) **EP 4 120 704 A1**
(43) Date of publication of application: **18.01.2023**
(21) Application number: 21788825.4
(22) Date of filing: 13.04.2021
(51) Int. Cl.: H04W 4/06, H04W 72/04

(54) **METHOD AND APPARATUS USED IN WIRELESS COMMUNICATION NODE**

(30) Priority: 15.04.2020 CN 202010293571
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN)
(74) Representative: Zhang, Fan
(86) International application number: PCT/CN2021/086776
(87) International publication number: WO 2021/208873

(57) **Abstract**

Disclosed are a method and apparatus used in a wireless communication node. A first node receives first configuration information, the first configuration information being not unicast information and indicating K sub-bearers, wherein K is a positive integer greater than 1; for any higher layer data packet transmitted by means of the K sub-bearers respectively, the any higher layer data packet has an identical serial number in the K sub-bearers; a first sub-bearer is one of the K sub-bearers, and the higher layer data packet transmitted in any of the K sub-bearers is transmitted by means of the first sub-bearer. The present application enables a user to obtain, by means of broadcast, configuration information of a sub-bearer which transmits an identical MBMS service on different nodes or different CGs, so as to obtain the identical MBMS service simultaneously by means of a plurality of different nodes, thereby effectively reducing service interruptions caused by a movement between nodes.

## Description

### TECHNICAL FIELD

The present application relates to transmission methods and devices in wireless communication systems, and in particular to a scheme and device for multicast and broadcast-related transmissions in wireless communications.

### BACKGROUND

Application scenarios of future wireless communication systems are becoming increasingly diversified, and different application scenarios have different performance demands on systems. In order to meet different performance requirements of various application scenarios, the 3rd Generation Partner Project (3GPP) Radio Access Network (RAN) #72 plenary decided to conduct the study of New Radio (NR), or what is called fifth Generation (5G). The work Item (WI) of NR was approved at the 3GPP RAN #75 session to standardize the NR.

A key technique in NR is to support Bandwidth Part (BWP). The BWP is a subset of an entire bandwidth of a cell; the size of each BWP, the Subcarrier Spacing (SCS) and the Cyclic Prefix (CP) type being used can be configured flexibly. The BWP has a role to play in the following aspects: lowering the requirements for UE capabilities, for instance, the UE can support only small bandwidths, like 20MHz, rather than provide support to the entire bandwidth, like 100MHz; using a larger bandwidth in the case of transmitting massive traffics, while in the case of transmitting few or even no traffics, using a smaller bandwidth, which can reduce the power consumption of the UE. The UE can be configured with one or multiple BWPs, and BWP switching/switch between any two of the multiple BWPs can be performed via an RRC signaling, a DCI, an inactivity timer or along with the initiation of random access.

The technique of Broadcast/Multicast transmission has been widely applied in cellular networks, such as Multimedia Broadcast Multicast Service (MBMS) in a 4G Long Term Evolution (LTE) system. One of major characteristics of the Broadcast/Multicast transmission lies in that a network device is capable of sending the same broadcast/multicast data to multiple terminal nodes simultaneously, which is of great importance to application scenarios like broadcast television, disaster alerting, services of urgency, industrial control and Vehicle-to-Everything ones. In LTE MBMS, an eNB schedules multiple terminal nodes via a Physical Downlink Control Channel (PDCCH) to receive a Physical Downlink Shared Channel (PDSCH) or a Physical Multicast Channel (PMCH) containing broadcast/multicast data. Broadcast/multicast-related identifiers include Single Cell RNTI (SC-RNTI), Single Cell Notification RNTI (SC-N-RNTI) and Group RNTI (G-RNTI).

A Work Item (WI) of NR Multicast was approved at the 3GPP RAN #86 Plenary to standardize NR by providing multicast and broadcast traffics in a Single Cell Point-to-MultiPoint (SC-PTM) mode.

### SUMMARY

Inventors find through researches that as a user moves, it leaves an SC-PTM cell for a cell not providing broadcast/multicast signal transmissions, and is then required to re-apply before continuing to receive MBMS services. The procedure will, in general, introduce traffic interruption of above 100ms, so how to ensure the traffic continuity during the movement is an issue that remains to be solved.

To address the above problem, the present application provides a solution. It should be noted that the description above takes the scenario of communications between the network equipment and the terminal as an example, though, the present application is also applicable to other communication scenarios, like the scenario of terminal-terminal communications, where similar technical effects can be achieved. Additionally, the adoption of a unified solution for various scenarios, including but not limited to communications between the network equipment and the terminal or inter-terminal communications, contributes to the reduction of hardcore complexity and costs. In the case of no conflict, the embodiments of a first node and the characteristics in the embodiments may be applied to a second node, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving first configuration information, the first configuration information being non-unicast, and the first configuration information indicating K sub-bearers;

herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the first configuration information being non-unicast means that the first configuration information is identified by a non-unicast index.

In one embodiment, the phrase of first configuration information indicating K sub-bearers comprises: the first configuration information indicating a same RB associated with the K sub-bearers.

In one embodiment, a non-unicast index used for identifying the first configuration information is a Group-Radio Network Temporary Identity (G-RNTI).

In one embodiment, a non-unicast index used for identifying the first configuration information is an SC-RNTI.

In one embodiment, a non-unicast index used for identifying the first configuration information is an SC-N-RNTI.

In one embodiment, a non-unicast index used for identifying the first configuration information is a System Information RNTI (SI-RNTI).

In one embodiment, a non-unicast index used for identifying the first configuration information comprises 16 bits.

In one embodiment, the higher-layer packet refers to a PDCP Protocol Data Unit (PDU).

In one embodiment, the higher-layer packet refers to a L2 packet.

In one embodiment, the higher-layer packet comprises at least one of a Sequence Number (SN) field or a Data field.

In one embodiment, a sequence number of the higher-layer packet is indicated by an SN field comprised in the higher-layer packet.

In one embodiment, a sequence number of the higher-layer packet is indicated by a sequence number comprised in a Data field comprised in the higher-layer packet.

Specifically, according to one aspect of the present application, the above method is characterized in further comprising:
receiving second configuration information, and as a response to receiving the second configuration information, establishing a first target sub-bearer;
herein, the second configuration information is unicast; the second configuration information indicates the first target sub-bearer from the K sub-bearers.

In one embodiment, the phrase of second configuration information being unicast comprises: the second configuration information being identified by a unicast index.

In one embodiment, the unicast index used for identifying the second configuration information is a Cell RNTI (C-RNTI).

In one embodiment, the unicast index used for identifying the second configuration information comprises 16 bits.

In one embodiment, K1 sub-bearers among the K sub-bearers (including the first target sub-bearer) are established; the second configuration information indicates the K1 sub-bearers from the K sub-bearers, where K1 is a positive integer greater than 1.

Specifically, according to another aspect of the present application, the above method is characterized in further comprising:
autonomously determining and establishing a second target sub-bearer from the K sub-bearers.

In one embodiment, the first receiver autonomously determines and establishes K2 sub-bearers among the K sub-bearers (including the second target sub-bearer); K2 is a positive integer greater than 1.

In one embodiment, a first sub-bearer is still maintained after establishment of the K2 sub-bearers.

In one embodiment, the first configuration information comprises K2 thresholds, the K2 thresholds respectively corresponding to K2 sub-bearers.

The present application provides a method in a second node for wireless communications, comprising:
transmitting first configuration information, the first configuration information being non-unicast, and the first configuration information indicating K sub-bearers;
herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

Specifically, according to one aspect of the present application, the above method is characterized in further comprising:
transmitting second configuration information;
herein, the second configuration information is unicast; the second configuration information indicates the first target sub-bearer from the K sub-bearers; as a response to receiving the second configuration information, the first target sub-bearer is established.

The present application provides a first node for wireless communications, comprising:
a first receiver, receiving first configuration information, the first configuration information being non-unicast, and the first configuration information indicating K sub-bearers;
herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

Specifically, according to one aspect of the present application, the above method is characterized in further comprising:
the first receiver, receiving second configuration information, and as a response to receiving the second configuration information, the first target sub-bearer is established;
herein, the second configuration information is unicast; the second configuration information indicates the first target sub-bearer from the K sub-bearers.

Specifically, according to one aspect of the present application, the above method is characterized in further comprising:
the first receiver autonomously determining and establishing a second target sub-bearer from the K sub-bearers.

The present application provides a second node for wireless communications, comprising:
a second transmitter, transmitting first configuration information, the first configuration information being non-unicast, and the first configuration information indicating K sub-bearers;
herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

Specifically, according to one aspect of the present application, the above method is characterized in further comprising:
the second transmitter, transmitting second configuration information;
herein, the second configuration information is unicast; the second configuration information indicates the first target sub-bearer from the K sub-bearers; as a response to receiving the second configuration information, the first target sub-bearer is established.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of processing of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of radio signal transmission according to one embodiment of the present application.
FIG. 6 illustrates a schematic diagram of a first node receiving traffics simultaneously through K sub-bearers according to one embodiment of the present application.
FIG. 7 illustrates a schematic diagram showing that a higher-layer packet is a PDCP PDU according to one embodiment of the present application.
FIG. 8 illustrates a schematic diagram showing that first configuration information comprises first sub-configuration-information and second sub-configuration-information according to one embodiment of the present application.
FIG. 9 illustrates a schematic diagram of a higher-layer packet which is transmitted in any of the K sub-bearers being transmitted through the first sub-bearer according to one embodiment of the present application.
FIG. 10 illustrates a structure block diagram of a processing device in a first node.
FIG. 11 illustrates a structure block diagram of a processing device in a second node.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

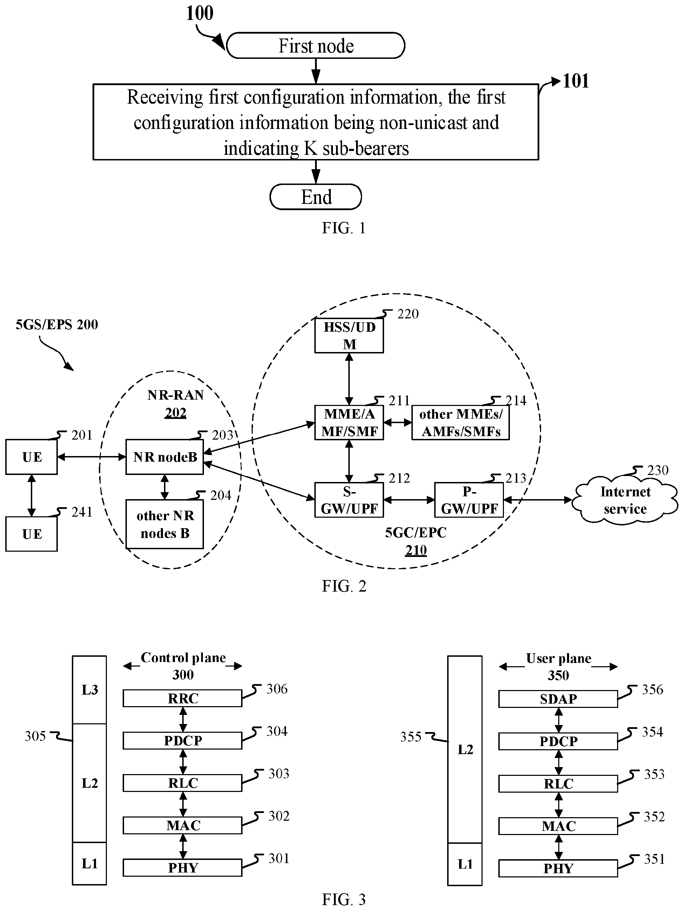

Embodiment 1 illustrates a flowchart of processing of a first node in one embodiment of the present application, as shown in FIG. 1. In FIG. 1, each box represents a step. Particularly, the sequential step arrangement in each box herein does not imply a chronological order of steps marked respectively by these boxes.

In Embodiment 1, the first node in the present application receives first configuration information in step 101, the first configuration information being non-unicast, and the first configuration information indicating K sub-bearers;
herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the first configuration information is transmitted by an RRC signaling.

In one embodiment, the first configuration information comprises all or part of an RRC signaling.

In one embodiment, the first configuration information comprises one or more fields in an RRC Information Element (IE).

In one embodiment, the first configuration information is transmitted by a higher layer signaling.

In one embodiment, the first configuration information comprises N pieces of sub-configuration-information, N being a positive integer greater than 1.

In one embodiment, the K sub-bearers are indicated by the N pieces of sub-configuration-information.

In one embodiment, N is 2.

In one embodiment, the first configuration information comprises first sub-configuration-information and second sub-configuration-information.

In one embodiment, N pieces of sub-configuration-information comprised in the first configuration information are transmitted by at least 2 RRC signalings.

In one embodiment, N pieces of sub-configuration-information comprised in the first configuration information are transmitted by at least 2 higher-layer signalings.

In one embodiment, the phrase of first configuration information being non-unicast comprises: the first configuration information being transmitted by means of broadcast, multicast or groupcast.

In one embodiment, the phrase of first configuration information being non-unicast comprises: the first configuration information being transmitted on a broadcast or multicast channel.

In one embodiment, the phrase of first configuration information being non-unicast comprises: the first configuration information being transmitted on a Physical Broadcast CHannel (PBCH).

In one embodiment, the phrase of first configuration information being non-unicast comprises: the first configuration information being transmitted on a Multicast Control Channel (MCCH).

In one embodiment, the phrase of first configuration information being non-unicast comprises: the first configuration information being transmitted on a Single Cell Multicast Control Channel (SC-MCCH).

In one embodiment, the phrase of first configuration information being non-unicast comprises: the first configuration information being identified by a non-unicast index.

In one embodiment, a non-unicast index used for identifying the first configuration information is a G-RNTI.

In one embodiment, a non-unicast index used for identifying the first configuration information is an SC-RNTI.

In one embodiment, a non-unicast index used for identifying the first configuration information is an SC-N-RNTI.

In one embodiment, a non-unicast index used for identifying the first configuration information is a System Information RNTI (SI-RNTI).

In one embodiment, a non-unicast index used for identifying the first configuration information comprises 16 bits.

In one embodiment, the non-unicast index used for identifying the first configuration information is used for scrambling CRC of the first configuration information.

In one embodiment, the non-unicast index used for identifying the first configuration information is used to determine a position of time-frequency resources occupied by the first configuration information.

In one embodiment, the non-unicast index used for identifying the first configuration information is used for generating a DeModulation Reference Signal (DMRS) of the first configuration information.

In one embodiment, the non-unicast index used for identifying the first configuration information is used to determine whether the first configuration information is correctly received.

In one embodiment, the phrase of first configuration information indicating K sub-bearers comprises: the first configuration information comprising a non-unicast index of any one of the K sub-bearers.

In one embodiment, a non-unicast index of any one of the K sub-bearers is a G-RNTI.

In one embodiment, a non-unicast index of any one of the K sub-bearers comprises 16 bits.

In one embodiment, the phrase of first configuration information indicating K sub-bearers comprises: the first configuration information indicating RBs associated with the K sub-bearers.

In one embodiment, the phrase of first configuration information indicating K sub-bearers comprises: the first configuration information indicating a same RB associated with the K sub-bearers.

In one embodiment, a same RB associated with the K sub-bearers is indicated by an RB identifier.

In one embodiment, the RB identifier is a positive integer.

In one embodiment, the RB identifier is an integer greater than or equal to 1 and less than or equal to 32.

In one embodiment, the phrase of first configuration information indicating K sub-bearers comprises: the first configuration information indicating MBMS services corresponding to a same RB associated with the K sub-bearers.

In one subembodiment, the same RB associated with the K sub-bearers is in one-to-one correspondence with MBMS services.

In one embodiment, the phrase of first configuration information indicating K sub-bearers comprises: the first configuration information indicating MBMS services corresponding to the K sub-bearers.

In one subembodiment, the first configuration information indicates that the K sub-bearers correspond to the same MBMS service.

In one subembodiment, the first configuration information indicates MBMS services corresponding to any of the K sub-bearers.

In one embodiment, the first configuration information indicates scheduling information of MBMS services corresponding to the K sub-bearers.

In one embodiment, the K sub-bearers transmit the same MBMS service or MBMS service session or MBMS session.

In one embodiment, MBMS service corresponding to a same RB associated with the K sub-bearers is indicated by an MBMS service identifier.

In one embodiment, an identifier of the MBMS service includes at least one of a G-RNTI, a Temporary Mobile Group Identification (TMGI) or a session ID.

In one embodiment, the same multicast/broadcast/groupcast services are transmitted on the K sub-bearers.

In one embodiment, the same multicast/broadcast/groupcast services are transmitted on a same RB associated with the K sub-bearers.

In one embodiment, the phrase of first configuration information indicating K sub-bearers comprises: the first configuration information comprising at least one of an RLC entity configuration, a logical channel configuration or scheduling information of a logical channel for any of the K sub-bearers.

In one embodiment, the phrase of first configuration information indicating K sub-bearers comprises: the first configuration information indicating a same higher-layer entity corresponding to the K sub-bearers.

In one embodiment, the phrase of first configuration information indicating K sub-bearers comprises: the first configuration information indicating a same L2 sublayer entity corresponding to the K sub-bearers.

In one embodiment, the phrase of first configuration information indicating K sub-bearers comprises: the first configuration information indicating a same PDCP entity corresponding to the K sub-bearers.

In one embodiment, the phrase of first configuration information indicating K sub-bearers comprises: the first configuration information indicating a same Service Data Adaptation Protocol (SDAP) entity corresponding to the K sub-bearers.

In one embodiment, any of the K sub-bearers is a Radio Link Control (RLC) bearer.

In one embodiment, the RLC bearer at least comprises one RLC entity.

In one embodiment, functions of the RLC sublayer are performed by an RLC entity.

In one embodiment, the RLC entity is in the RLC sublayer.

In one embodiment, the RLC entity receives an RLC SDU from a higher layer and transmits an RLC PDU via a lower layer to a counterpart entity for the RLC entity.

In one embodiment, the RLC entity delivers an RLC SDU to a higher layer and receives an RLC PDU via a lower layer from a counterpart entity for the RLC entity.

In one embodiment, the higher layer comprises a Packet Data Convergence Protocol (PDCP) sublayer.

In one embodiment, the higher layer comprises a Service Data Adaptation Protocol (SDAP) sublayer.

In one embodiment, the higher layer includes the L2.

In one embodiment, the higher layer includes the L3.

In one embodiment, any of the K sub-bearers comprises an RLC Channel.

In one embodiment, any of the K sub-bearers comprises at least one of an RLC entity or a MAC entity.

In one embodiment, any of the K sub-bearers comprises a sublayer entity of the L2.

In one embodiment, the K sub-bearers at least correspond to 2 network nodes.

In one embodiment, the at least two network nodes corresponding to the K sub-bearers are radio access nodes.

In one embodiment, the first node receives data via the K sub-bearers from nodes corresponding to the K sub-bearers.

In one embodiment, the K sub-bearers at least correspond to 2 cells.

In one embodiment, the K sub-bearers at least correspond to 2 Serving Cells.

In one embodiment, the K sub-bearers at least correspond to 2 Cell Groups (CGs).

In one embodiment, the K sub-bearers at least correspond to a Master Cell Group (MCG) and a Secondary Cell Group (SCG).

In one subembodiment, a counterpart entity of an RLC entity of the K sub-bearers at least occupies resources of an MCG and an SCG.

In one embodiment, CGs corresponding to the K sub-bearers at least include an MCG.

In one embodiment, the K sub-bearers at least correspond to a Master node (MN) and a Secondary node (SN).

In one embodiment, a counterpart entity of an RLC entity of the K sub-bearers at least occupies resources of an MN and an SN.

In one embodiment, the MN refers to a radio access node connected to a control plane provided to the core network.

In one embodiment, the radio access node includes an eNB, an ng-eNB and a gNB.

In one embodiment, the SN refers to a radio access node not connected to a control plane provided to the core network.

In one embodiment, the SN provides extra resources for the UE.

In one embodiment, the MCG comprises a serving cell of an MN

In one embodiment, the MCG refers to a group of serving cells associated with an MN.

In one embodiment, the SCG comprises a serving cell of an SN.

In one embodiment, the SCG refers to a group of serving cells associated with an SN.

In one embodiment, the K sub-bearers at least correspond to a source node and a destination node.

In one embodiment, any of the K sub-bearers corresponds to a serving cell.

In one embodiment, the K sub-bearers correspond to K serving cells, with each of the K sub-bearers in one-to-one correspondence with one of the K serving cells.

In one embodiment, any of the K sub-bearers corresponds to a CG.

In one subembodiment, a counterpart entity of an RLC entity of any of the K sub-bearers occupies resources of a corresponding CG.

In one embodiment, the K sub-bearers correspond to K CGs, with each of the K sub-bearers in one-to-one correspondence with one of the K CGs.

In one embodiment, K CGs that correspond to the K sub-bearers are respectively associated with different radio access nodes.

In one embodiment, any of the K sub-bearers corresponds to a network node.

In one embodiment, the K sub-bearers correspond to K network nodes, with each of the K sub-bearers in one-to-one correspondence with one of the K network nodes.

In one embodiment, a network node corresponding to any of the K sub-bearers is a radio access node.

In one subembodiment, a counterpart entity of an RLC entity of any of the K sub-bearers occupies resources of a corresponding node.

In one embodiment, any of the K sub-bearers corresponds to a cell.

In one embodiment, any of the K sub-bearers corresponds to a Serving Cell.

In one embodiment, Serving Cells corresponding to any two of the K sub-bearers belong to different CGs.

In one embodiment, Serving Cells corresponding to any two of the K sub-bearers are in different radio access nodes.

In one embodiment, Serving Cells corresponding to any two of the K sub-bearers are in different nodes.

In one embodiment, any of the K sub-bearers is transmitted on an SC-MTCH.

In one embodiment, a same RB associated with the K sub-bearers is a split RB.

In one embodiment, the phrase that the RB is a split RB means that an RLC bearer of the RB corresponds to an MCG and an SCG.

In one embodiment, the phrase that the RB is a split RB means that the RB comprises an MCG RLC bearer and an SCG RLC bearer.

In one embodiment, the phrase that the RB is a split RB means that the RB comprises an MCG RLC and an SCG RLC.

In one embodiment, the phrase that the RB is a split RB means that the RB comprises an MCG RLC entity and an SCG RLC entity.

In one embodiment, the phrase that the RB is a split RB means that any RLC bearer of the RB corresponds to a different CG.

In one embodiment, a same RB associated with the K sub-bearers is a Multicast Radio Bearer (MRB).

In one embodiment, a same RB associated with the K sub-bearers is a Single Cell Multicast Radio Bearer (SC-MRB).

In one embodiment, K is 2.

In one embodiment, the higher-layer packet refers to a PDCP Service Data Unit (SDU).

In one embodiment, the higher-layer packet refers to a PDCP Protocol Data Unit (PDU).

In one embodiment, the higher-layer packet refers to a SDAP PDU.

In one embodiment, the higher-layer packet refers to a L2 packet.

In one embodiment, the higher-layer packet refers to an IP packet.

In one embodiment, the higher-layer packet refers to a L3 packet.

In one embodiment, the higher-layer packet comprises at least one of a Sequence Number (SN) field or a Data field.

In one subembodiment, the sequence number of the higher-layer packet is indicated by the SN field.

In one subembodiment, the sequence number of the higher-layer packet is indicated by a packet transmitted by the Data field.

In one embodiment, an SN field comprised in a higher-layer packet is padded with a padding bit.

In one embodiment, the padding bit is set to 0.

In one embodiment, a length of an SN field comprised in the higher-layer packet is M bits, where M is a positive integer.

In one embodiment, a length of an SN field comprised in the higher-layer packet is 7 bits.

In one embodiment, a Data field comprised in the higher-layer packet transmits a L3 packet.

In one embodiment, a Data field comprised in the higher-layer packet transmits a PDCP SDU.

In one embodiment, a Data field comprised in the higher-layer packet transmits a L2 packet.

In one subembodiment, the PDCP PDU refers to a PDCP DATA PDU.

In one embodiment, the L2 packet comprises at least one of a PDCP SDU, a PDCP PDU, an RLC SDU, an RLC PDU, a MAC SDU, a MAC PDU, an SDAP PDU or an SDAP SDU.

In one embodiment, a sequence number of the higher-layer packet is indicated by an SN field comprised in the higher-layer packet.

In one embodiment, a sequence number of the higher-layer packet is indicated by a sequence number comprised in a Data field comprised in the higher-layer packet.

In one embodiment, the phrase that "sequence numbers of the higher-layer packet in the K sub-bearers are the same" comprises: Any higher-layer packet of the same sequence number being transmitted in each of the K sub-bearers.

In one embodiment, the phrase that "sequence numbers of the higher-layer packet in the K sub-bearers are the same" comprises: Apart from the higher-layer packet, there being at least one higher-layer packet which is only transmitted by partial sub-bearers among the K sub-bearers.

In one embodiment, the phrase that "a higher-layer packet transmitted in any of the K sub-bearers is transmitted through the first sub-bearer" comprises: A packet transmitted via the first sub-bearer being transmitted on all of the K sub-bearers.

In one embodiment, the phrase that "a higher-layer packet transmitted in any of the K sub-bearers is transmitted through the first sub-bearer" comprises: There being a packet transmitted via the first sub-bearer that is only transmitted by partial sub-bearers among the K sub-bearers.

In one embodiment, the first sub-bearer corresponds to a second node.

In one embodiment, the second node is an MN

In one embodiment, the second node is a source node.

In one embodiment, the first sub-bearer corresponds to an MCG.

In one embodiment, the MCG is in the second node.

In one embodiment, the first sub-bearer corresponds to a Serving Cell.

In one embodiment, the first sub-bearer corresponds to a CG, the CG being in the second node.

In one embodiment, a counterpart entity of an RLC entity of the first sub-bearer is in an MCG.

In one embodiment, a counterpart entity of an RLC entity of the first sub-bearer occupies resources of an MCG.

In one embodiment, a counterpart entity of an RLC entity of the first sub-bearer is in a second node.

In one embodiment, a counterpart entity of an RLC entity of the first sub-bearer occupies resources of a second node.

In one embodiment, the first node establishes a first sub-bearer to start to receive MBMS services transmitted by a first bearer, the MBMS services being services in which the first node is interested.

In one embodiment, the first node establishes a first sub-bearer to start to receive MBMS services transmitted by an RB associated with a first sub-bearer, the MBMS services being services in which the first node is interested.

In one embodiment, the first node establishes a first sub-bearer to start to receive a session of MBMS services or MBMS sessions transmitted by a first bearer, the MBMS services being services in which the first node is interested.

In one embodiment, the first node establishes a first sub-bearer to start to receive a session of MBMS services or MBMS sessions transmitted by an RB associated with a first sub-bearer, the MBMS services being services in which the first node is interested.

In one embodiment, as the MBMS service or a session of MBMS services or MBMS session in which the first node is interested starts, the first sub-bearer is established.

In one embodiment, the MBMS services or a session of MBMS services or MBMS session in which the first node is interested are transmitted by the first sub-bearer.

In one embodiment, the MBMS services or a session of MBMS services or MBMS session in which the first node is interested are transmitted by an RB associated with the first sub-bearer.

In one embodiment, the phrase of establishing a first sub-bearer comprises: configuring a logical channel used for the first sub-bearer.

In one embodiment, the logical channel used for the first sub-bearer is an SC-MTCH.

In one embodiment, the phrase of establishing a first sub-bearer comprises: indicating that a MAC receives a DL-Shared CHannel (DL-SCH) on a cell corresponding to the first sub-bearer, and using a G-RNTI corresponding to the first sub-bearer and/or scheduling information of a logical channel for the first sub-bearer.

In one embodiment, MBMS service corresponding to an RB associated with the first sub-bearer is transmitted on a DL-SCH received on a cell corresponding to the first sub-bearer.

In one embodiment, the phrase of establishing a first sub-bearer comprises: indicating that a MAC receives MBMS services corresponding to the target sub-bearer on a cell corresponding to the first sub-bearer, and using a G-RNTI corresponding to the first sub-bearer and/or scheduling information of a logical channel for the first sub-bearer.

In one embodiment, the phrase of establishing a first sub-bearer comprises: Notifying a higher layer of establishment of the first sub-bearer.

In one embodiment, the phrase of establishing a first sub-bearer comprises: Notifying a higher layer of establishment of an RB corresponding to the first sub-bearer.

In one embodiment, the first node receives data via the first sub-bearer from an MCG.

In one embodiment, the first configuration information indicates an identifier of the first sub-bearer.

In one embodiment, the first configuration information indicates a CG identifier corresponding to the first sub-bearer.

In one embodiment, the first configuration information indicates an identifier of any one of the K sub-bearers.

In one embodiment, the first configuration information indicates a cell corresponding to any one of the K sub-bearers.

In one embodiment, a cell corresponding to any of the K sub-bearers is indicated by a cell identifier.

In one embodiment, the first configuration information indicates a Serving Cell corresponding to any one of the K sub-bearers.

In one embodiment, a Serving Cell corresponding to any of the K sub-bearers is indicated by a Serving Cell identifier.

In one embodiment, the first configuration information indicates a CG corresponding to any one of the K sub-bearers.

In one embodiment, a CG corresponding to any of the K sub-bearers is indicated by a CG identifier.

In one embodiment, the first configuration information indicates a radio access node corresponding to any one of the K sub-bearers.

In one embodiment, a radio access node corresponding to any of the K sub-bearers is indicated by a radio access node identifier.

In one embodiment, the first configuration information indicates at least one of configuration information of a logical channel for the first sub-bearer, a G-RNTI corresponding to the first sub-bearer or scheduling information of a logical channel for the first sub-bearer.

In one embodiment, the first configuration information indicates at least one of configuration information of a logical channel for any of the K sub-bearers, a G-RNTI corresponding to the any sub-bearer or scheduling information of a logical channel for the any sub-bearer.

In one embodiment, the phrase that a higher-layer packet is transmitted through the first sub-bearer comprises: the higher-layer packet being transmitted by the first sub-bearer.

In one embodiment, the phrase that a higher-layer packet is transmitted through the first sub-bearer comprises: the higher-layer packet being received by the first sub-bearer.

In one embodiment, the first sub-bearer corresponds to a source node.

In one embodiment, the first sub-bearer corresponds to an acceptable cell for the first node.

In one embodiment, the first sub-bearer corresponds to a node corresponding to an acceptable cell for the first node.

In one embodiment, the first sub-bearer corresponds to a serving cell of the first node.

In one embodiment, the first sub-bearer corresponds to a node corresponding to a serving cell of the first node.

In one embodiment, the serving cell refers to a cell on which the first node is camped.

In one embodiment, the first sub-bearer corresponds to a suitable cell for the first node.

In one embodiment, the first sub-bearer corresponds to a node corresponding to a suitable cell for the first node.

In one embodiment, the present application has the following advantages: Users can acquire configuration information of a sub-bearer that transmits the same MBMS service on different nodes or CGs by means of a broadcast method, and thus can acquire the same MBMS service simultaneously from multiple nodes, which can reduce the frequency of traffic interruptions caused by inter-node mobility.

### Embodiment 2

Embodiment 2 illustrates a schematic diagram of a network architecture according to the present application, as shown in FIG. 2. FIG. 2 is a diagram illustrating a network architecture 200 of 5G NR, Long-Term Evolution (LTE) and Long-Term Evolution Advanced (LTE-A) systems. The 5G NR or LTE network architecture 200 may be called 5G System/Evolved Packet System (5GS/EPS) 200 or other appropriate terms. The 5GS/EPS 200 may comprise one or more UEs 201, an NG-RAN 202, a 5G-Core Network/Evolved Packet Core (5GC/EPC) 210, a Home Subscriber Server/ Unified Data Management (HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected with the 5G-CN/EPC 210 via an S1/NG interface. The 5G-CN/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/ AMF/ SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the first node in the present application includes the UE 201.

In one embodiment, the second node in the present application includes the gNB203.

In one embodiment, the third node in the present application includes the gNB204.

In one embodiment, the first node and the second node in the present application are respectively the UE201 and the gNB203.

In one embodiment, the first node and the second node in the present application are respectively the UE201, the gNB203 and the gNB204.

In one embodiment, the UE201 and the gNB203 are connected by a Uu interface.

In one embodiment, the first node in the present application includes the UE 241.

In one embodiment, the second node in the present application includes the gNB203.

In one embodiment, the first node and the second node in the present application are respectively the UE241 and the gNB203.

In one embodiment, the first node and the second node in the present application are respectively the UE241, the gNB203 and the gNB204.

In one embodiment, the UE241 and the gNB203 are connected by a Uu interface.

In one embodiment, a radio link from the UE201 to the gNB203 is uplink.

In one embodiment, a radio link from the gNB203 to the UE201 is downlink.

In one embodiment, the UE 201 supports DRX transmission.

In one embodiment, the UE 241 supports DRX transmission.

In one embodiment, the second node in the present application includes the UE 201.

In one embodiment, the second node in the present application includes the gNB204.

In one embodiment, the UE in the present application includes the UE 201.

In one embodiment, the UE in the present application includes the UE 241.

In one embodiment, the base station in the present application includes the gNB203.

In one embodiment, the base station in the present application includes the gNB204.

In one embodiment, the UE 201 supports sidelink transmission.

In one embodiment, the UE 201 supports a PC5 interface.

In one embodiment, the UE 201 supports a Uu interface.

In one embodiment, the UE 241 supports sidelink transmission.

In one embodiment, the UE 241 supports a PC5 interface.

In one embodiment, the gNB203 supports a Uu interface.

In one embodiment, the gNB203 supports Integrated Access and Backhaul (IAB).

In one embodiment, the gNB 203 is a MacroCellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

### Embodiment 3

Embodiment 3 illustrates a schematic diagram of an embodiment of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first node (UE, or RSU in V2X, vehicle-mounted equipment or vehicle-mounted communication module) and a second node (gNB, UE, or RSU in V2X, vehicle-mounted equipment or vehicle-mounted communication module), or between two UEs is represented by three layers, which are a layer 1, a layer 2 and a layer 3, respectively. The layer 1 (L1) is the lowest layer which performs signal processing functions of various PHY layers. The L1 is called PHY 301 in the present application. The layer 2 (L2) 305 is above the PHY 301, and is in charge of the link between the first node and the second node, and between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All the three sublayers terminate at the second nodes of the network side. The PDCP sublayer 304 provides data encryption and integrity protection, and provides support for handover of a first node between second nodes. The RLC sublayer 303 provides segmentation and reassembling of a packet, retransmission of a lost packet via ARQ, as well as support for detections over repeated packets and protocol errors. The MAC sublayer 302 provides mapping between a logical channel and a transport channel and multiplexing of logical channels. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several upper layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the L2 305 belongs to a higher layer.

In one embodiment, the RRC sublayer 306 in the L3 belongs to a higher layer.

In one embodiment, functions of the RLC sublayer are performed by the RLC entity.

In one embodiment, functions of the PDCP sublayer are performed by the PDCP entity.

In one embodiment, for the RLC entity configured at the second node, there is a counterpart entity configured at the first node; and vice versa.

In one embodiment, the RLC entity receives an RLC SDU from a higher layer and transmits an RLC PDU via a lower layer to a counterpart entity for the RLC entity.

In one embodiment, the RLC entity delivers an RLC SDU to a higher layer and receives an RLC PDU via a lower layer from a counterpart entity for the RLC entity.

In one embodiment, the PDCP sublayer 354 belongs to a higher layer.

In one embodiment, the SDAP sublayer 356 belongs to a higher layer.

In one embodiment, the L3 belongs to a higher layer.

In one embodiment, the MAC sublayer belongs to a lower layer.

### Embodiment 4

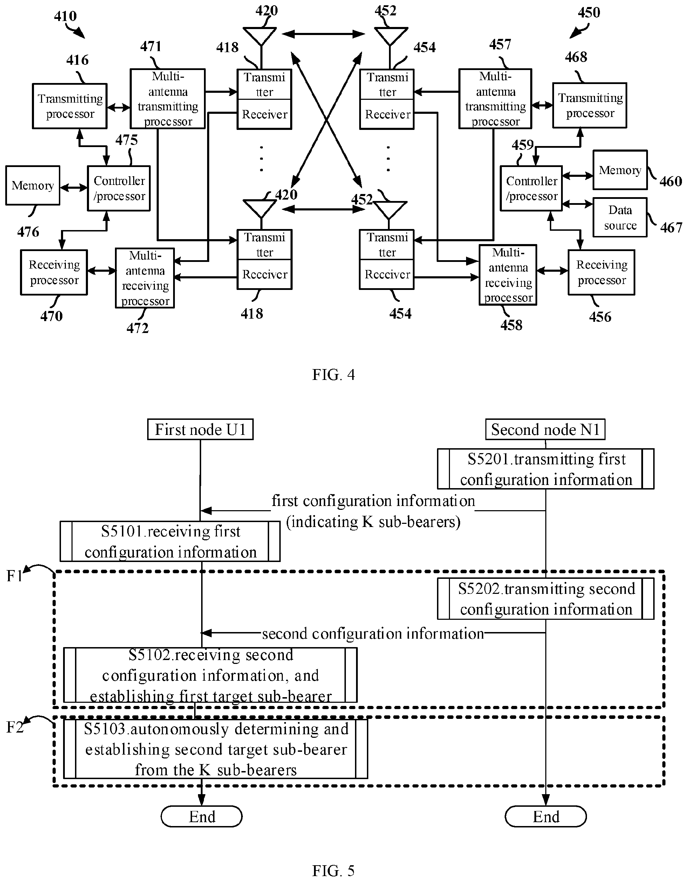

Embodiment 4 illustrates a schematic diagram of a first communication device and a second communication device according to the present application, as shown in FIG. 4. FIG. 4 is a block diagram of a first communication device 410 and a second communication device 450 in communication with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from a core network is provided to the controller/processor 475. The controller/processor 475 provides functions of the L2 layer. In the transmission from the first communication device 410 to the second communication device 450, the controller/processor 475 provides header compression, encryption, packet segmentation and reordering, and multiplexing between a logical channel and a transport channel, and radio resource allocation of the second communication device 450 based on various priorities. The controller/processor 475 is also in charge of a retransmission of a lost packet and a signaling to the second communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 450 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts baseband multicarrier symbol streams which have gone through reception analog precoding/beamforming operations from time domain to frequency domain using FFT. In frequency domain, physical layer data signals and reference signals are de-multiplexed by the receiving processor 456, where the reference signals are used for channel estimation while data signals are processed in the multi-antenna receiving processor 458 by multi-antenna detection to recover any spatial stream targeting the second communication device 450. Symbols on each spatial stream are demodulated and recovered in the receiving processor 456 to generate a soft decision. Then the receiving processor 456 decodes and de-interleaves the soft decision to recover the higher-layer data and control signal transmitted by the first communication device 410 on the physical channel. Next, the higher-layer data and control signal are provided to the controller/processor 459. The controller/processor 459 provides functions of the L2 layer. The controller/processor 459 can be associated with a memory 460 that stores program code and data. The memory 460 can be called a computer readable medium. In the transmission from the first communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication node 410 to the second communication node 450, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also responsible for a retransmission of a lost packet, and a signaling to the first communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 first converts a baseband symbol stream provided by the multi-antenna transmitting processor 457 into a radio frequency symbol stream, and then provides the radio frequency symbol stream to the antenna 452.

In a transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data. The memory 476 can be called a computer readable medium. In the transmission between the second communication device 450 and the first communication device 410, the controller/processor 475 provides de-multiplexing between a transport channel and a logical channel, packet reassembling, decrypting, header decompression, control signal processing so as to recover a higher-layer packet from the second communication device (UE) 450. The higher-layer packet coming from the controller/processor 475 may be provided to the core network.

In one embodiment, the first communication node 450 comprises at least one processor and at least one memory, the at least one memory comprises computer program codes; the at least one memory and the computer program codes are configured to be used in collaboration with the at least one processor. The first communication device 450 at least: receives first configuration information, the first configuration information being non-unicast, and the first configuration information indicating K sub-bearers; herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the first communication node 450 comprises a memory that stores a computer readable instruction program, the computer readable instruction program generates actions when executed by at least one processor, which include: receiving first configuration information, the first configuration information being non-unicast, and the first configuration information indicating K sub-bearers; herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the second communication node 410 comprises at least one processor and at least one memory, the at least one memory comprises computer program codes; the at least one memory and the computer program codes are configured to be used in collaboration with the at least one processor. The second communication device 410 at least: transmits first configuration information, the first configuration information being non-unicast, and the first configuration information indicating K sub-bearers; herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the second communication node 410 comprises a memory that stores a computer readable instruction program, the computer readable instruction program generates actions when executed by at least one processor, which include: transmitting first configuration information, the first configuration information being non-unicast, and the first configuration information indicating K sub-bearers; herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the first communication device 450 corresponds to the first node in the present application.

In one embodiment, the second communication device 410 corresponds to the second node in the present application.

In one embodiment, the first node in the present application comprises the first communication device 450, and the second node in the present application comprises the second communication device 410.

In one subembodiment, the first node is a UE, and the second node is a UE.

In one subembodiment, the first node is a UE, and the second node is a relay node.

In one subembodiment, the first node is a UE, and the second node is a base station.

In one subembodiment, the first node is a relay node, and the second node is a base station.

In one subembodiment, the first node is a base station, and the second node is a base station.

In one subembodiment, the first communication device 450 comprises: at least one controller/processor; the at least one controller/processor is in charge of HARQ operation.

In one subembodiment, the second communication device 410 comprises: at least one controller/processor; the at least one controller/processor is in charge of HARQ operation.

In one subembodiment, the second communication device 410 comprises: at least one controller/processor; the at least one controller/processor is in charge of error detections using ACK and/or NACK protocols to support HARQ operation.

In one embodiment, at least one of the antenna 452, the receiver 454, the multi-antenna receiving processor 458, the receiving processor 456, the controller/processor 459, the memory 460, or the data source 467 is used for receiving the first radio signal in the present application.

In one embodiment, at least one of the antenna 452, the receiver 454, the multi-antenna receiving processor 458, the receiving processor 456, the controller/processor 459, the memory 460, or the data source 467 is used for receiving the first signaling in the present application.

In one embodiment, at least one of the antenna 420, the receiver 418, the multi-antenna receiving processor 472, the receiving processor 470, the controller/processor 475, or the memory 476 is used for transmitting the first radio signal in the present application.

In one embodiment, at least one of the antenna 420, the receiver 418, the multi-antenna receiving processor 472, the receiving processor 470, the controller/processor 475, or the memory 476 is used for transmitting the first signaling in the present application.

### Embodiment 5

Embodiment 5 illustrates a flowchart of radio signal transmission according to one embodiment of the present application, as shown in FIG. 5. In FIG. 5, a first node U1 and a second node N1 are in communications via an air interface. In FIG. 5, the sequential step arrangement in each box herein does not imply a chronological order of steps marked respectively by these boxes.

The first node U1 receives first configuration information in step S5101, the first configuration information being non-unicast, and the first configuration information indicating K sub-bearers; receives second configuration information, and establishes a first target sub-bearer in step S5102; and autonomously determines and establishes a second target sub-bearer from the K sub-bearers in step S5103.

The second node N1 transmits first configuration information in step S5201; and transmits second configuration information in step S5202.

Herein, the steps S5102 and S5202 included in the dotted-line box F1 are optional, and the step S5103 included in the dotted-line box F2 is optional.

Herein, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer; the second configuration information is unicast, which indicates the first target sub-bearer from the K sub-bearers.

In one embodiment, the first node is in a connected state.

In one embodiment, the phrase of establishing a first target sub-bearer comprises: establishing an RLC entity of the first target sub-bearer.

In one embodiment, the phrase of establishing a first target sub-bearer comprises: configuring a logical channel used for the first target sub-bearer.

In one embodiment, the logical channel used for the first target sub-bearer is an SC-MTCH.

In one embodiment, the phrase of establishing a first target sub-bearer comprises: indicating that a MAC receives a DL-SCH on a cell corresponding to the first target sub-bearer, and using a G-RNTI corresponding to the first target sub-bearer and/or scheduling information of a logical channel for the first target sub-bearer.

In one embodiment, MBMS service corresponding to an RB associated with the first target sub-bearer is transmitted on a DL-SCH received on a cell corresponding to the first target sub-bearer.

In one embodiment, the phrase of establishing a first target sub-bearer comprises: indicating that a MAC receives a MBMS service corresponding to the first target sub-bearer on a cell corresponding to a first target sub-bearer, and using a G-RNTI corresponding to the first target sub-bearer and/or scheduling information of a logical channel for the first target sub-bearer.

In one embodiment, the phrase of establishing a first target sub-bearer comprises: Notifying a higher layer of establishment of the first target sub-bearer.

In one embodiment, the first target sub-bearer corresponds to a PSCell.

In one embodiment, after receiving the second configuration information, first configuration information is retained.

In one embodiment, the second configuration information indicates at least one of configuration information of a logical channel for a first target sub-bearer, a G-RNTI corresponding to the first target sub-bearer or scheduling information of a logical channel for the first target sub-bearer.

In one embodiment, the second configuration information indicates MBMS service corresponding to the first target sub-bearer.

In one embodiment, MBMS service corresponding to the first target sub-bearer is indicated by an MBMS service identifier.

In one embodiment, the MBMS service identifier includes at least one of a G-RNTI, a TMGI or a Session ID.

In one embodiment, the second configuration information indicates an RB associated with the first target sub-bearer.

In one embodiment, the second configuration information indicates MBMS service corresponding to an RB associated with the first target sub-bearer.

In one embodiment, MBMS service corresponding to an RB associated with the first target sub-bearer is indicated by an MBMS service identifier.

In one embodiment, after establishing the first target sub-bearer, the first node still retains a first sub-bearer.

In one embodiment, after establishing the first target sub-bearer, the first node receives a same MBMS service or a session of a same MBMS service or a same MBMS session through the first sub-bearer and the first target sub-bearer.

In one embodiment, the phrase of second configuration information being unicast comprises: the second configuration information being identified by a unicast index.

In one embodiment, the unicast index used for identifying the second configuration information is a Cell RNTI (C-RNTI).

In one embodiment, the unicast index used for identifying the second configuration information comprises 16 bits.

In one embodiment, the unicast index used for identifying the second configuration information is used for scrambling CRC of the second configuration information.

In one embodiment, the unicast index used for identifying the second configuration information is used to determine a position of time-frequency resources occupied by the second configuration information.

In one embodiment, the unicast index used for identifying the second configuration information is used for generating a DMRS of the second configuration information.

In one embodiment, the unicast index used for identifying the second configuration information is used to determine whether the second configuration information is correctly received.

In one embodiment, the phrase of second configuration information being unicast comprises: the second configuration information being transmitted by means of unicast.

In one embodiment, the phrase of second configuration information being unicast comprises: The second configuration information is transmitted on a unicast channel.

In one embodiment, the phrase of second configuration information being unicast comprises: The second configuration information is transmitted on a Dedicated Control Channel (DCCH).

In one embodiment, the phrase of second configuration information being unicast comprises: the second configuration information being UE-specific.

In one embodiment, the phrase that the second configuration information indicates the first target sub-bearer from the K sub-bearers comprises: the second configuration information indicating an identifier of a same RB associated with K sub-bearers.

In one embodiment, the phrase that the second configuration information indicates the first target sub-bearer from the K sub-bearers comprises: The second configuration information indicating an identifier of a MBMS service corresponding to an RB identifier associated with the K sub-bearers.

In one embodiment, the phrase that the second configuration information indicates the first target sub-bearer from the K sub-bearers comprises: The second configuration information indicating an identifier of a first target sub-bearer.

In one embodiment, the phrase that the second configuration information indicates the first target sub-bearer from the K sub-bearers comprises: The second configuration information indicating a CG identifier corresponding to a first target sub-bearer.

In one embodiment, the phrase that the second configuration information indicates the first target sub-bearer from the K sub-bearers comprises: The second configuration information indicating a Serving Cell identifier corresponding to a first target sub-bearer.

In one embodiment, the phrase that the second configuration information indicates the first target sub-bearer from the K sub-bearers comprises: The second configuration information indicating a cell identifier corresponding to a first target sub-bearer.

In one embodiment, the phrase that the second configuration information indicates the first target sub-bearer from the K sub-bearers comprises: The second configuration information indicating a radio access node identifier corresponding to a first target sub-bearer.

In one embodiment, the phrase that the second configuration information indicates the first target sub-bearer from the K sub-bearers comprises: The second configuration information indicating an identifier of a same RB corresponding to the K sub-bearers and a CG identifier corresponding to the first target sub-bearer.

In one embodiment, the phrase that the second configuration information indicates the first target sub-bearer from the K sub-bearers comprises: The second configuration information indicating an identifier of an RB corresponding to the first target sub-bearer and a CG identifier corresponding to the first target sub-bearer.

In one embodiment, an identifier of an RB corresponding to the first target sub-bearer is the same as an RB identifier corresponding to the first sub-bearer.

In one embodiment, the second information is used for configuring an SCG, the SCG corresponding to a first target sub-bearer.

In one embodiment, the second information is used for configuring one or multiple CGs, the one or multiple CGs not including a CG corresponding to the first sub-bearer.

In one embodiment, the second information is used for configuring one or multiple CGs, the one or multiple CGs not including an MCG.

In one embodiment, the phrase that the second configuration information indicates the first target sub-bearer from the K sub-bearers comprises: the second information being used for configuring an SCG, the SCG corresponding to a first target sub-bearer, the second configuration information indicating an identifier of an RB corresponding to the first target sub-bearer.

In one embodiment, the first target sub-bearer is established in response to reception of the second configuration information.

In one embodiment, the second configuration information indicates a switch.

In one embodiment, the second configuration information is used for triggering a switch based on Dual Connectivity (DC).

In one embodiment, the second configuration information is used for triggering a switch based on Dual Active Protocol Stack (DAPS).

In one embodiment, the second configuration information is used for configuring Dual Active Protocol Stack (DAPS).

In one embodiment, the second configuration information indicates addition or modification of an SN, the SN corresponding to the first target sub-bearer.

In one embodiment, the second configuration information indicates addition or modification of an SCG, the SCG corresponding to the first target sub-bearer.

In one embodiment, the second configuration information indicates addition or modification of a Serving Cell in an SCG, the Serving Cell in the SCG corresponding to the first target sub-bearer.

In one embodiment, the second configuration information indicates addition or modification of an SN.

In one embodiment, the second configuration information indicates addition or modification of an SCG.

In one embodiment, the second configuration information indicates addition or modification of a Serving Cell in an SCG.

In one embodiment, the second configuration information indicates addition or modification of a PScell.

In one embodiment, a transmitter of the second configuration information is a second node.

In one embodiment, the second node is an MN

In one embodiment, the first node still maintains a first sub-bearer after establishing the first target sub-bearer.

In one embodiment, the first receiver establishes K1 sub-bearers among the K sub-bearers (including the first target sub-bearer); the second configuration information indicates the K1 sub-bearers from the K sub-bearers, where K1 is a positive integer greater than 1.

In one embodiment, the phrase of indicating the K1 sub-bearers from the K sub-bearers comprises: second configuration information indicating identifiers of the K1 sub-bearers.

In one embodiment, the phrase of indicating the K1 sub-bearers from the K sub-bearers comprises: second configuration information indicating an identifier of a radio access node corresponding to the K1 sub-bearers.

In one embodiment, the phrase of indicating the K1 sub-bearers from the K sub-bearers comprises: second configuration information indicating an identifier of a CG corresponding to the K1 sub-bearers.

In one embodiment, the phrase of indicating the K1 sub-bearers from the K sub-bearers comprises: second configuration information indicating an identifier of a Serving Cell corresponding to the K1 sub-bearers.

In one embodiment, the K1 sub-bearers are established in response to reception of the second configuration information.

In one embodiment, a first sub-bearer is still maintained after establishment of the K1 sub-bearers.

In one embodiment, after establishing the K1 sub-bearers, the first node receives a same MBMS service or a session of a same MBMS service or a same MBMS session through the K1 sub-bearers and the first target sub-bearer.

In one embodiment, the phrase of establishing the K1 sub-bearers comprises: establishing an RLC entity of any one of the K1 sub-bearers.

In one embodiment, the phrase of establishing the K1 sub-bearers comprises: configuring a logical channel used for any one of the K1 sub-bearers.

In one embodiment, the logical channel used for any of the K1 sub-bearers is an SC-MTCH.

In one embodiment, the phrase of establishing the K1 sub-bearers comprises: indicating that a MAC receives a DL-SCH on a cell corresponding to any of the K1 sub-bearers, and using a G-RNTI corresponding to any of the K1 sub-bearers and/or scheduling information of a logical channel for any of the K1 sub-bearers.

In one embodiment, MBMS service corresponding to an RB associated with any one of the K1 sub-bearers is transmitted on a DL-SCH received on a Serving Cell corresponding to any one of the K1 sub-bearers.

In one embodiment, the phrase of establishing the K1 sub-bearers comprises: Notifying a higher layer of establishment of the K1 sub-bearers.

In one embodiment, the second configuration information indicates MBMS service corresponding to any one of the K1 sub-bearers.

In one embodiment, MBMS service corresponding to any one of the K1 sub-bearers is indicated by an MBMS service identifier.

In one embodiment, the second configuration information indicates RBs associated with the K1 sub-bearers.

In one embodiment, the second configuration information indicates a same RB associated with the K1 sub-bearers.

In one embodiment, a same RB associated with the K1 sub-bearers is indicated by an RB identifier.

In one embodiment, the second configuration information indicates MBMS services corresponding to RBs associated with the K1 sub-bearers.

In one embodiment, the second configuration information indicates MBMS service corresponding to a same RB associated with the K1 sub-bearers.

In one embodiment, MBMS service corresponding to a same RB associated with the K1 sub-bearers is indicated by an MBMS service identifier.

In one embodiment, the second information is used for configuring CGs corresponding to the K1 sub-bearers.

In one embodiment, the K1 sub-bearers respectively correspond to K1 CGs.

In one embodiment, the phrase that the second configuration information indicates the K1 sub-bearers from the K sub-bearers comprises: the second information is used for configuring CGs corresponding to the K sub-bearers, the second configuration information indicating identifiers of RBs associated with the K1 sub-bearers.

In one embodiment, the phrase that the second configuration information indicates the K1 sub-bearers from the K sub-bearers comprises: the second information is used for configuring CGs corresponding to the K sub-bearers, the second configuration information indicating an identifier of a same RB associated with the K1 sub-bearers.

In one embodiment, the first node is in an idle state.

In one embodiment, the phrase of autonomously determining includes monitoring channel quality.

In one embodiment, the phrase of autonomously determining includes monitoring a received quality of a synchronization signal.

In one embodiment, the phrase of autonomously determining includes monitoring a received quality of a broadcast channel.

in one embodiment, the channel quality includes at least one of a received quality of a synchronization signal or a received quality of a broadcast channel.

In one embodiment, the phrase of autonomously determining includes monitoring a channel quality of a CG corresponding to any one of the K sub-bearers.

In one embodiment, the phrase of autonomously determining includes monitoring a channel quality of a Serving Cell corresponding to any one of the K sub-bearers.

In one embodiment, the phrase of autonomously determining includes monitoring a received quality of a synchronization signal or of a broadcast channel of a Serving Cell corresponding to any one of the K sub-bearers.

In one embodiment, the phrase of autonomously determining includes monitoring a received quality of a synchronization signal or of a broadcast channel of a CG corresponding to any one of the K sub-bearers.

In one embodiment, first configuration information comprises a first threshold.

In one embodiment, the first configuration information is used to determine a second target sub-bearer.

In one embodiment, the phrase of autonomously determining includes: establishing a second target sub-bearer when a monitored channel quality exceeds a first threshold.

In one embodiment, the phrase of autonomously determining includes: establishing a second target sub-bearer when there is at least one channel quality exceeding a first threshold among channel qualities of Serving Cells respectively corresponding to any of the K sub-bearers being monitored.

In one embodiment, when there is at least one sub-bearer corresponding to a Serving Cell of which the channel quality exceeds a first threshold, a Serving Cell corresponding to the second target sub-bearer is of a highest channel quality.

In one embodiment, the phrase of autonomously determining includes: establishing a second target sub-bearer when there is at least one received quality exceeding a first threshold among received qualities of synchronization signals of Serving Cells respectively corresponding to any of the K sub-bearers being monitored.

In one embodiment, when there is at least one sub-bearer corresponding to a Serving Cell of which the received quality of a synchronization signal exceeds a first threshold, a Serving Cell corresponding to the second target sub-bearer is of a highest channel quality.

In one embodiment, the phrase of autonomously determining includes: establishing a second target sub-bearer when there is at least one received quality exceeding a first threshold among received qualities of broadcast channels of Serving Cells respectively corresponding to any of the K sub-bearers being monitored.

In one embodiment, when there is at least one sub-bearer corresponding to a Serving Cell of which the received quality of a broadcast channel exceeds a first threshold, a broadcast channel of a Serving Cell corresponding to the second target sub-bearer is of a highest received quality.

In one embodiment, after establishing the second target sub-bearer, the first node still retains a first sub-bearer.

In one embodiment, after establishing the second target sub-bearer, the first node receives a same MBMS service or a session of a same MBMS service or a same MBMS session through the first sub-bearer and the first target sub-bearer.

In one embodiment, the phrase of establishing a second target sub-bearer comprises: establishing an RLC entity of a second target sub-bearer.

In one embodiment, the phrase of establishing a second target sub-bearer comprises: configuring a logical channel used for a second target sub-bearer.

In one embodiment, the logical channel used for a second target sub-bearer is an SC-MTCH.

In one embodiment, the phrase of establishing a second target sub-bearer comprises: indicating that a MAC receives a DL-SCH on a cell corresponding to a second target sub-bearer, and using a G-RNTI corresponding to the second target sub-bearer and/or scheduling information of a logical channel for the second target sub-bearer.

In one embodiment, MBMS service corresponding to an RB associated with the second target sub-bearer is transmitted on a DL-SCH received on a cell corresponding to the second target sub-bearer.

In one embodiment, the phrase of establishing a second target sub-bearer comprises: indicating that a MAC receives a MBMS service corresponding to a second target sub-bearer on a cell corresponding to the second target sub-bearer, and using a G-RNTI corresponding to the second target sub-bearer and/or scheduling information of a logical channel for the second target sub-bearer.

In one embodiment, the phrase of establishing a second target sub-bearer comprises: Notifying a higher layer of establishment of the second target sub-bearer.

In one embodiment, the first receiver autonomously determines and establishes K2 sub-bearers among the K sub-bearers (including the second target sub-bearer); K2 is a positive integer greater than 1.

In one embodiment, a first sub-bearer is still maintained after establishment of the K2 sub-bearers.

In one embodiment, the first threshold is used to determine K2 sub-bearers.

In one embodiment, the first configuration information comprises K2 thresholds, the K2 thresholds being used to determine K2 sub-bearers.

In one embodiment, the K2 thresholds respectively correspond to K2 sub-bearers.

In one embodiment, the first configuration information comprises K thresholds, the K thresholds respectively corresponding to K sub-bearers.

In one embodiment, the phrase of autonomously determining includes: establishing the K2 sub-bearers when there are K2 channel qualities exceeding a first threshold among channel qualities of Serving Cells respectively corresponding to any of the K sub-bearers being monitored.

In one embodiment, the phrase of autonomously determining includes: establishing the K2 sub-bearers when there are K2 received qualities exceeding a first threshold among received qualities of synchronization signals of Serving Cells respectively corresponding to any of the K sub-bearers being monitored.

In one embodiment, the phrase of autonomously determining includes: establishing the K2 sub-bearers when there are K2 channel qualities respectively exceeding thresholds of corresponding sub-bearers among channel qualities of Serving Cells respectively corresponding to any of the K sub-bearers being monitored.

In one embodiment, the phrase of autonomously determining includes: establishing the K2 sub-bearers when there are K2 received qualities respectively exceeding thresholds of corresponding sub-bearers among received qualities of synchronization signals of Serving Cells respectively corresponding to any of the K sub-bearers being monitored.

In one embodiment, the phrase of establishing K2 sub-bearers comprises: establishing an RLC entity of any one of K2 sub-bearers.

In one embodiment, the phrase of establishing K2 sub-bearers comprises: configuring a logical channel used for any one of K2 sub-bearers.

In one embodiment, the logical channel used for any of K2 sub-bearers is an SC-MTCH.

In one embodiment, the phrase of establishing K2 sub-bearers comprises: indicating that a MAC receives a DL-SCH on a cell corresponding to any of the K2 sub-bearers, and using a G-RNTI corresponding to the K2 sub-bearers and/or scheduling information of a logical channel for the K2 sub-bearers.

In one embodiment, MBMS services corresponding to RBs associated with the K2 sub-bearers are transmitted on a DL-SCH received on a cell corresponding to any of the K2 sub-bearers.

In one embodiment, the phrase of establishing K2 sub-bearers comprises: indicating that a MAC receives a MBMS service on a cell corresponding to any of the K2 sub-bearers, and using a G-RNTI corresponding to any of the K2 sub-bearers and/or scheduling information of a logical channel for any of the K2 sub-bearers.

In one embodiment, the MBMS service corresponds to any of K2 sub-bearers.

In one embodiment, the phrase of establishing K2 sub-bearers comprises: Notifying a higher layer of establishment of the K2 sub-bearers.

In one embodiment, the phrase of establishing K2 sub-bearers comprises: Notifying a higher layer of establishment of RBs corresponding to K2 sub-bearers.

### Embodiment 6

Embodiment 6 illustrates a schematic diagram of a first node receiving traffics simultaneously through K sub-bearers according to one embodiment of the present application, where K is 2.

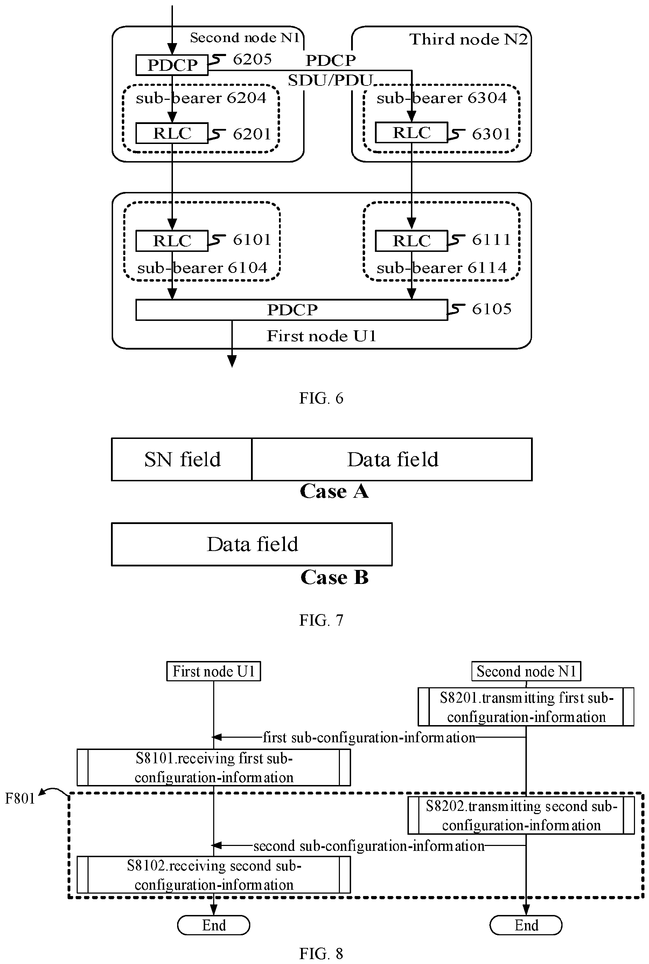

In FIG. 6, the first node receives traffics simultaneously through a sub-bearer 6104 and a sub-bearer 6114. In FIG. 6, the sub-bearer 6104 comprises an RLC 6101; the sub-bearer 6114 comprises an RLC6111. In FIG. 6, an RLC 620 is a counterpart entity of the RLC 6101, and vice versa. In FIG. 6, an RLC 6301 is a counterpart entity of the RLC 6111, and vice versa.

In one embodiment, the sub-bearer 6104 in FIG. 6 is the first sub-bearer.

In one embodiment, the sub-bearer 6114 in FIG. 6 is the first target sub-bearer.

In one embodiment, the sub-bearer 6114 in FIG. 6 is the second target sub-bearer.

In one embodiment, the first node receives a same MBMS service, or a session of a same MBMS service, or a same MBMS session simultaneously through a sub-bearer 6104 and a sub-bearer 6114.

In one embodiment, for any higher-layer packet transmitted respectively through the first sub-bearer and the first target sub-bearer, sequence numbers of the higher-layer packet in the two sub-bearers are the same.

In one embodiment, for any higher-layer packet transmitted respectively through the first sub-bearer and the second target sub-bearer, sequence numbers of the higher-layer packet in the two sub-bearers are the same.

In one embodiment, a higher-layer packet transmitted in the first target sub-bearer is transmitted through the first sub-bearer.

In one embodiment, a higher-layer packet transmitted in the second target sub-bearer is transmitted through the first sub-bearer.

In one embodiment, the higher-layer packet is a PDCP PDU.

In one embodiment, the higher-layer packet is a PDCP SDU.

In one embodiment, the PDCP6105 in FIG. 6 is a receiving PDCP entity.

In one embodiment, the PDCP6205 in FIG. 6 is a transmitting PDCP entity.

In one embodiment, the PDCP6105 in FIG. 6 does not use the function of PDCP duplication.

In one embodiment, the PDCP6105 in FIG. 6 uses the function of PDCP duplication.

In one embodiment, the PDCP6105 in FIG. 6 only uses the function of PDCP duplication.

In one embodiment, the PDCP6105 in FIG. 6 does not use at least one of the functions of reordering, integrity protection, ciphering, RObust Header Compression (ROHC) and PDCP duplicating.

In one embodiment, the PDCP6105 in FIG. 6 does not use at least one of the functions of reordering, integrity protection, ciphering, and RObust Header Compression (ROHC).

In one embodiment, the PDCP6105 in FIG. 6 is a PDCP entity of an RB associated with the first sub-bearer.

In one embodiment, the PDCP6105 in FIG. 6 is a PDCP entity of an RB associated with the first target sub-bearer.

In one embodiment, the PDCP6105 in FIG. 6 is a PDCP entity of an RB associated with the second target sub-bearer.

In one embodiment, a PDCP entity of an RB associated with the sub-bearer is a PDCP entity associated with the sub-bearer.

In one embodiment, RLC entities associated with the PDCP6105 in FIG. 6 include: RLC6101 and RLC6111.

In one embodiment, RLC entities associated with the PDCP6205 in FIG. 6205 include: RLC6201 and RLC6301.

In one embodiment, when establishing a first sub-bearer, a PDCP entity of an RB associated with the first sub-bearer is not established.

In one embodiment, when establishing a first sub-bearer, a PDCP entity of an RB associated with the first sub-bearer is established.

In one embodiment, functions of the PDCP sublayer are performed by the PDCP entity.

In one embodiment, a PDCP entity of an RB associated with the first sub-bearer is not established.

In one embodiment, when establishing a first sub-bearer, a PDCP entity of an RB associated with the first sub-bearer is established.

In one embodiment, when establishing a first target sub-bearer, a PDCP entity of an RB associated with the first target sub-bearer is not established.

In one embodiment, when establishing a first target sub-bearer, a PDCP entity of an RB associated with the first target sub-bearer is established.

In one subembodiment, when establishing a first target sub-bearer, a PDCP entity of an RB associated with the first target sub-bearer is established, and the function of PDCP duplication is activated.

In one embodiment, when establishing a second target sub-bearer, a PDCP entity of an RB associated with the second target sub-bearer is not established.

In one embodiment, when establishing a second target sub-bearer, a PDCP entity of an RB associated with the second target sub-bearer is established.

In one subembodiment, when establishing a second target sub-bearer, a PDCP entity of an RB associated with the second target sub-bearer is established, and the function of PDCP duplication is activated.

In one embodiment, the function of PDCP duplication refers to submission of duplicates being performed by a transmitting PDCP entity.

In one embodiment, the function of PDCP duplication refers to duplicate discard being performed by a receiving PDCP entity.

In one embodiment, the function of PDCP duplication refers to submission of duplicates being performed.

In one embodiment, the function of PDCP duplication refers to duplicate discard being performed.

In one embodiment, the submission of duplicates includes: a PDCP PDU being duplicated and delivered to an associated RLC entity.

In one embodiment, the duplicate discard includes: if a PDCP PDU which shares a same sequence number with a received PDCP PDU is already received, discarding the received PDCP PDU.

In one embodiment, the sequence number refers to a sequence number of a higher-layer packet.

In one embodiment, the sequence number comprises a sequence number and a Hyper Frame Number (HFN) of a higher-layer packet.

In one embodiment, the sequence number comprises a HFN and a PDCP SN.

In one embodiment, when the PDCP duplicating function is activated, a PDCP PDU is duplicated and delivered to an associated RLC entity.

In one embodiment, when the PDCP duplicating function is activated, if a PDCP PDU which shares a same sequence number with a received PDCP PDU was already received, the received PDCP PDU is discarded.

In one embodiment, when the PDCP entity is established, if a PDCP PDU which shares a same sequence number with a received PDCP PDU was already received, the received PDCP PDU is discarded.

In one embodiment, a PDCP entity of a same RB corresponding to the K sub-bearers does not use the PDCP duplicating function.

In one embodiment, a PDCP entity of a same RB corresponding to the K sub-bearers uses the PDCP duplicating function.

In one embodiment, a PDCP header is added by a PDCP entity of a same RB corresponding to the K sub-bearers.

In one embodiment, a PDCP header is removed by a PDCP entity of a same RB corresponding to the K sub-bearers.

In one embodiment, the first configuration information indicates configuration information of a PDCP entity of a same RB associated with K sub-bearers.

In one embodiment, configuration information of a same PDCP entity corresponding to the K sub-bearers includes configuration of the function of PDCP duplication.

In one embodiment, the first configuration information indicates configuration information of a PDCP entity of an RB associated with a first sub-bearer.

In one embodiment, the PDCP6205 in FIG. 6 does not use the function of PDCP duplication.

In one embodiment, the PDCP6205 in FIG. 6 uses the function of PDCP duplication.

In one embodiment, the PDCP6205 in FIG. 6 only uses the function of PDCP duplication.

In one embodiment, the second node N1 and the third node N2 are connected via an Xn interface.

In one embodiment, the second node N1 and the third node N2 are connected via an X2 interface.

In one embodiment, the second node N1 and the third node N2 are connected via a wired interface.

In one embodiment, the wired interface includes at least one of an Xn interface, an X2 interface or an S1 interface.

In one embodiment, the PDCP PDU is transmitted by the second node N1 to the third node N2 via a wired interface.

In one embodiment, the PDCP SDU is transmitted by the second node N1 to the third node N2 via a wired interface.

In one embodiment, the L2 packet is transmitted by the second node N1 to the third node N2 via a wired interface.

In one embodiment, the higher-layer packet is transmitted by the second node N1 to the third node N2 via a wired interface.

In one embodiment, the higher-layer packet and the SN are transmitted by the second node N1 to the third node N2 via a wired interface.

### Embodiment 7

Embodiment 7 illustrates a schematic diagram of a higher-layer packet comprising at least one of an SN field or a Data field according to one embodiment of the present application.

In Case A of Embodiment 7, the PDCP PDU comprises an SN field and a Data field.

In Case B of Embodiment 7, the PDCP PDU comprises a Data field.

In one embodiment, the higher-layer packet is a PDCP PDU.

In one embodiment, the PDCP PDU refers to a PDCP DATA PDU.

In one embodiment, a sequence number of the PDCP PDU is indicated by a PDCP SN.

In one embodiment, a length of an SN comprised in the PDCP PDU is M bits, where M is a positive integer.

In one embodiment, a length of an SN comprised in the PDCP PDU is 7 bits.

In one embodiment, a length of an SN comprised in the PDCP PDU is 12 bits.

In one embodiment, a length of an SN comprised in the PDCP PDU is 15 bits.

In one embodiment, a length of an SN comprised in the PDCP PDU is 18 bits.

In one embodiment, a Data field comprised in the PDCP PDU comprises a PDCP SDU.

In one embodiment, a Data field comprised in the PDCP PDU comprises a L2 packet.

In one embodiment, a Data field comprised in the PDCP PDU comprises a L3 packet.

In one embodiment, a Data field comprised in the PDCP PDU comprises a higher-layer packet.

In one embodiment, a sequence number of the PDCP PDU is indicated by a higher-layer packet comprised in a Data field.

In one embodiment, the PDCP PDU comprises at least one of an SN field or a Data field.

In one embodiment, the higher-layer packet refers to a PDCP PDU, and a sequence number of the higher-layer packet refers to a PDCP SN.

In one embodiment, the higher-layer packet refers to a PDCP PDU, and a sequence number of the higher-layer packet is indicated by a DATA field in the PDCP PDU.

In one subembodiment, the sequence number of the higher-layer packet refers to a sequence number of a packet transmitted by a Data field in the PDCP PDU.

In one embodiment, an SN field comprised in the PDCP PDU is padded with a padding bit.

In one embodiment, the padding bit is set to 0.

### Embodiment 8

Embodiment 8 illustrates a schematic diagram showing that first configuration information comprises first sub-configuration-information and second sub-configuration-information according to one embodiment of the present application. In FIG. 8, the sequential step arrangement in each box herein does not imply a chronological order of steps marked respectively by these boxes.

The first node U1 receives first sub-configuration-information in step S8101; and receives second sub-configuration-information in step S8102.

The second node N1 transmits first sub-configuration-information in step S8201; and transmits second sub-configuration-information in step S8202.

Herein, the first sub-configuration-information indicates M sub-bearer(s) among the K sub-bearers, M being a positive integer; the second configuration information indicates sub-bearer(s) not yet indicated by first sub-configuration-information among the K sub-bearers.

In one embodiment, the first sub-configuration-information and the second sub-configuration-information are respectively transmitted by 2 signalings.

In one embodiment, M sub-bearer(s) indicated by the first sub-configuration-information includes(include) a first sub-bearer.

In one embodiment, sub-bearer(s) indicated by the second sub-configuration-information includes(include) a first target sub-bearer.

In one embodiment, sub-bearer(s) indicated by the second sub-configuration-information includes(include) a second target sub-bearer.

In one embodiment, at least one sub-bearer of the M sub-bearer(s) indicated by the first sub-configuration-information corresponds to an MN.

In one embodiment, at least one sub-bearer of the sub-bearer(s) indicated by the first sub-configuration-information corresponds to an MCG.

In one embodiment, at least one sub-bearer of the sub-bearer(s) indicated by the second sub-configuration-information corresponds to an SN.

In one embodiment, at least one sub-bearer of the sub-bearer(s) indicated by the second sub-configuration-information corresponds to an SCG.

In one embodiment, the first sub-configuration-information is transmitted by an RRC signaling.

In one embodiment, the first sub-configuration-information comprise all or part of an RRC signaling.

In one embodiment, the first sub-configuration-information comprises one or more fields in an RRC Information Element (IE).

In one embodiment, the first sub-configuration-information is transmitted by a higher layer signaling.

In one embodiment, the first sub-configuration-information is transmitted on an SC-MCCH.

In one embodiment, the first sub-configuration-information is non-unicast.

In one embodiment, the phrase that the first sub-configuration-information is non-unicast means that the first sub-configuration-information is transmitted on a broadcast or multicast channel.

In one embodiment, the phrase that the first sub-configuration-information is non-unicast comprises: the first sub-configuration-information being identified by a non-unicast index.

In one embodiment, the non-unicast index is an SC-RNTI.

In one embodiment, the non-unicast index comprises 16 bits.

In one embodiment, the second sub-configuration-information is transmitted by an RRC signaling.

In one embodiment, the second sub-configuration-information comprises one or more fields in a System Informant Block (SIB).

In one embodiment, the second sub-configuration-information is transmitted by a higher layer signaling.

In one embodiment, the second sub-configuration-information is transmitted on a PBCH.

In one embodiment, the second sub-configuration-information is non-unicast.

In one embodiment, the phrase that the second sub-configuration-information is non-unicast means that the second sub-configuration-information is transmitted on a broadcast or multicast channel.

In one embodiment, the phrase that the second sub-configuration-information is non-unicast comprises: the second sub-configuration-information being identified by a non-unicast index.

In one embodiment, the non-unicast index is an SI-RNTI.

In one embodiment, the first sub-configuration-information corresponds to an MN.

In one embodiment, the first sub-configuration-information is used for configuring MN-related sub-bearer(s).

In one embodiment, the first sub-configuration-information corresponds to an MCG.

In one embodiment, the first sub-configuration-information is used for configuring MCG-related sub-bearer(s).

In one embodiment, the second sub-configuration-information corresponds to an SN.

In one embodiment, the second sub-configuration-information is used for configuring SN-related sub-bearer(s).

In one embodiment, the second sub-configuration-information corresponds to an SCG.

In one embodiment, the second sub-configuration-information is used for configuring SCG-related sub-bearer(s).

In one embodiment, the first sub-configuration-information indicates whether the second sub-configuration-information exists or not.

In one embodiment, the second node transmits third configuration-information to indicate whether the second sub-configuration-information exists or not.

In one embodiment, the third configuration information indicates scheduling information of an SC-MCCH.

In one embodiment, the third configuration information indicates scheduling information of first sub-configuration-information.

In one embodiment, the third configuration information is transmitted by a higher layer signaling.

In one embodiment, the third configuration information comprise all or part of an RRC layer signaling.

In one embodiment, the third configuration information comprises one or more fields in an RRC IE.

In one embodiment, the third configuration information comprises one or more fields in a SIB.

In one embodiment, the first configuration information is transmitted directly, while the second configuration is transmitted upon request.

In one embodiment, the second configuration information is transmitted by Other System Information (OSI).

In one embodiment, the present application has the following advantages: configuration information of K sub-bearers are respectively transmitted by multiple signalings, and the network side can trigger transmission of partial configuration information according to the requests of users, thus reducing signaling overhead.

### Embodiment 9

Embodiment 9 illustrates a schematic diagram of a higher-layer packet which is transmitted in any of the K sub-bearers being transmitted through the first sub-bearer according to one embodiment of the present application, where K is 2. In Embodiment 9, "#figure" each indicates a higher-layer packet. In Embodiment 9, any two higher-layer packets marked with a same "#figure" are the same packet; any two higher-layer packets marked with a different "#figure" are different packets.

In Case A of Embodiment 9, totally identical higher-layer packets are transmitted respectively on a sub-bearer 9104 and a sub-bearer 9114.

In Case B of Embodiment 9, of a higher-layer packet transmitted on a sub-bearer 9104 only some part is transmitted on a sub-bearer 9114.

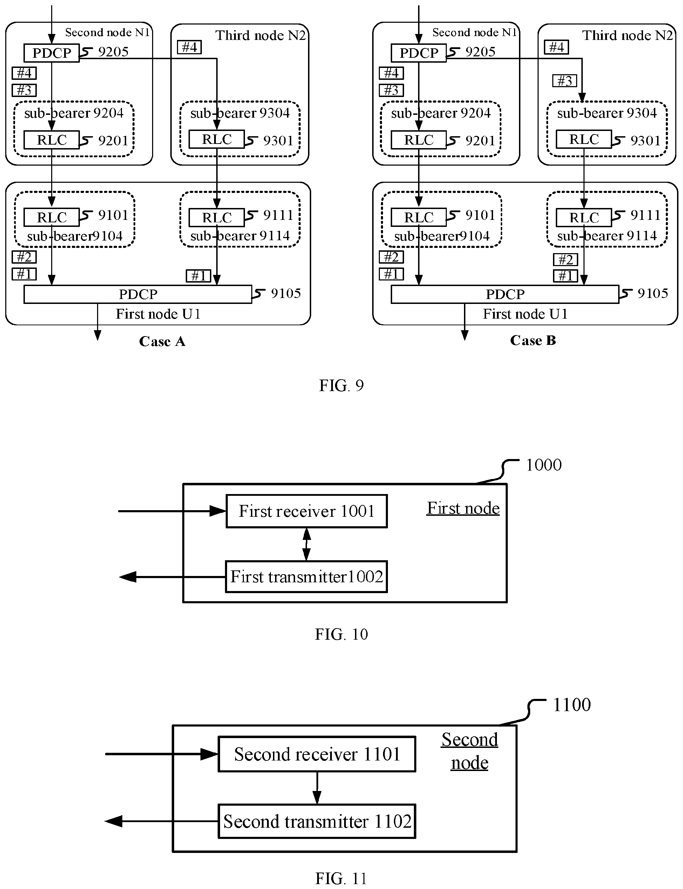

In one embodiment, the sub-bearer 9104 in FIG. 9 is the first sub-bearer.

In one embodiment, the sub-bearer 9114 in FIG. 9 is the first target sub-bearer.

In one embodiment, the sub-bearer 9114 in FIG. 9 is the second target sub-bearer.

In one embodiment, any higher-layer packet marked among #1, #2, #3, ... in FIG. 9 is a PDCP SDU.

In one embodiment, any higher-layer packet marked among #1, #2, #3, ... in FIG. 9 is a PDCP PDU.

In one embodiment, the higher layer 9105 and higher layer 9205 refer to PDCP sublayers.

In one embodiment, the higher layer 9205 performs the PDCP duplicating function.

In one embodiment, the higher layer 9205 performs duplication of a PDCP PDU.

In one embodiment, the higher layer 9205 performs duplication of a higher-layer packet.

In one embodiment, the higher layer 9105 performs the PDCP routing function.

In one embodiment, the higher layer 9105 performs routing of a higher-layer packet.

In one embodiment, the higher layer 9105 performs deletion of a duplicate packet.

In one embodiment, the higher layer 9105 does not perform deletion of a duplicate packet, but instead delivers received packet directly to an upper layer.

In one embodiment, the higher layer 9105 does not perform deletion of a duplicate packet, but instead delivers received packet with header removed to an upper layer.

In one embodiment, the second node N1 determines routing or duplicating of a higher-layer packet according to status information provided by the third node N2.

In one embodiment, the status information comprises the status information of a channel between the first node U1 and the third node N2.

In one embodiment, the status information comprises the processing capability or buffer status information of the third node N2.

### Embodiment 10

Embodiment 10 illustrates a structure block diagram of a processing device used in a first node, as shown in FIG. 10. In Embodiment 10, a processing device 1000 in the first node comprises a first receiver 1001 and a first transmitter 1002.

The first receiver 1001 receives first configuration information, the first configuration information being non-unicast, and the first configuration information indicating K sub-bearers.

In Embodiment 10, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the first receiver 1001 receives second configuration information, and as a response to receiving the second configuration information, establishes a first target sub-bearer.

In Embodiment 10, the second configuration information is unicast; the second configuration information indicates the first target sub-bearer from the K sub-bearers.

In one embodiment, the first receiver 1001 autonomously determines and establishes a second target sub-bearer from the K sub-bearers.

In one embodiment, the first node processing device 1000 is a UE.

In one embodiment, the first node processing device 1000 is a relay node.

In one embodiment, the first node processing device 1000 is a base station.

In one embodiment, the first node processing device 1000 is vehicle-mounted communication equipment.

In one embodiment, the first node processing device 1000 is a UE supporting V2X communications.

In one embodiment, the first node processing device 1000 is a relay node supporting V2X communications.

In one embodiment, the first node processing device 1000 is a base station supporting IAB.

In one embodiment, the first transmitter 1002 comprises at least one of the antenna 452, the transmitter/receiver 454, the multi-antenna transmitting processor 457, the transmitting processor 468, the controller/processor 459, the memory 460 or the data source 467 in FIG. 4 of the present application.

In one embodiment, the first transmitter 1002 comprises the antenna 452, the transmitter/receiver 454, the multi-antenna transmitting processor 457, the transmitting processor 468, the controller/processor 459, the memory 460 and the data source 467 in FIG. 4 of the present application.

In one embodiment, the first receiver 1001 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1001 comprises the antenna 452, the receiver 454, the multi-antenna receiving processor 458, the receiving processor 456, the controller/processor 459, the memory 460 and the data source 467 in FIG. 4 of the present application.

### Embodiment 11

Embodiment 11 illustrates a structure block diagram of a processing device used in a second node according to one embodiment of the present application, as shown in FIG. 11. In FIG. 11, a processing device 1100 in the second node comprises a second receiver 1101 and a second transmitter 1102.

The second transmitter 1102 transmits first configuration information, the first configuration information being non-unicast, and the first configuration information indicating K sub-bearers.

In Embodiment 11, K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

In one embodiment, the second transmitter 1102 transmits second configuration information.

In Embodiment 11, the second configuration information is unicast; the second configuration information indicates the first target sub-bearer from the K sub-bearers; as a response to receiving the second configuration information, the first target sub-bearer is established.

In one embodiment, the second node processing device 1100 is a UE.

In one embodiment, the second node processing device 1100 is a base station.

In one embodiment, the second node processing device 1100 is a relay node.

In one embodiment, the second node processing device 1100 is a UE supporting V2X communications.

In one embodiment, the second node processing device 1100 is a base station supporting V2X communications.

In one embodiment, the second node processing device 1100 is a relay node supporting V2X communications.

In one embodiment, the second node processing device 1100 is a base station supporting IAB.

In one embodiment, the second transmitter 1102 comprises at least one of the antenna 420, the transmitter 418, the multi-antenna transmitting processor 471, the transmitting processor 416, the controller/processor 475 or the memory 476.

In one embodiment, the second receiver 1101 comprises at least one of the antenna 420, the receiver 418, the multi-antenna receiving processor 472, the receiving processor 470, the controller/processor 475 or the memory 476.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The base station or network equipment in the present application includes but is not limited to macro-cellular base stations, micro-cellular base stations, home base stations, relay base station, eNB, gNB, Transmitter Receiver Point (TRP), GNSS, relay satellite, satellite base station, airborne base station and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first receiver, receiving first configuration information, the first configuration information being non-unicast, and the first configuration information indicating K sub-bearers;
wherein K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

2. The first node according to claim 1, comprising:
the first receiver, receiving second configuration information, and as a response to receiving the second configuration information, establishing a first target sub-bearer;
wherein the second configuration information is unicast; the second configuration information indicates the first target sub-bearer from the K sub-bearers.

3. The first node according to claim 1, wherein the first receiver autonomously determines and establishes a second target sub-bearer among the K sub-bearers.

4. The first node according to any of claims 1-3, wherein the first configuration information being non-unicast means that the first configuration information is identified by a non-unicast index.

5. The first node according to any of claims 1-4, comprising: the K sub-bearers corresponding to a same RB.

6. A second node for wireless communications, comprising:
a second transmitter, transmitting first configuration information, the first configuration information being non-unicast, and the first configuration information indicating K sub-bearers;
wherein K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

7. The second node according to claim 6, comprising:
the second transmitter, transmitting second configuration information;
wherein the second configuration information is unicast; the second configuration information indicates the first target sub-bearer from the K sub-bearers; as a response to receiving the second configuration information, the first target sub-bearer is established.

8. A method in a first node for wireless communications, comprising:
receiving first configuration information, the first configuration information being non-unicast, and the first configuration information indicating K sub-bearers;
wherein K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer.

9. The method in the first node according to claim 8, comprising:
receiving second configuration information, and as a response to receiving the second configuration information, the first target sub-bearer is established;
wherein the second configuration information is unicast; the second configuration information indicates the first target sub-bearer from the K sub-bearers.

10. A method in a second node for wireless communications, comprising:
transmitting first configuration information, the first configuration information being non-unicast, and the first configuration information indicating K sub-bearers;
wherein K is a positive integer greater than 1; for any higher-layer packet transmitted respectively through the K sub-bearers, sequence numbers of the higher-layer packet in the K sub-bearers are the same; a first sub-bearer is one of the K sub-bearers, and a higher-layer packet transmitted in any of the K sub-bearers is transmitted through the first sub-bearer

11. The method in the second node according to claim 10, comprising:
transmitting second configuration information;
wherein the second configuration information is unicast; the second configuration information indicates the first target sub-bearer from the K sub-bearers; as a response to receiving the second configuration information, the first target sub-bearer is established.
